# EUROPÄISCHE PATENTSCHRIFT

(11) **EP 2 371 683 B1**
(45) Veröffentlichungstag und Bekanntmachung des Hinweises auf die Patenterteilung: **21.08.2019**
(21) Anmeldenummer: 11154450.8
(22) Anmeldetag: 15.02.2011
(51) Int. Cl.: B62D 65/14, B60N 2/68

(54) **Greifsystem und Verfahren zum Einbringen eines Fahrzeugsitzes in die Karosserie eines Fahrzeuges**
Grip system and method for positioning a vehicle seat into a vehicle chassis
Système de saisie et procédé d'introduction d'un siège de véhicule dans la carrosserie d'un véhicule

(30) Priorität: 30.03.2010 DE 102010013366
(43) Veröffentlichungstag der Anmeldung: 05.10.2011
(73) Patentinhaber: Bayerische Motoren Werke Aktiengesellschaft, 80809 München (DE)
(72) Erfinder: Strebin, Michael, 80809, Muenchen (DE); Wunderle, Hermann, 93128, Regenstauf (DE); Prasch, Alfons, 94350, Falkenfels (DE); Winter, Mario, 84381, Johanniskirchen (DE)

(56) Entgegenhaltungen:
- DE-A1- 10 250 680
- JP-A- 6 092 278
- JP-A- 11 049 054
- JP-A- 2005 329 895

## Beschreibung

Die vorliegende Erfindung betrifft ein Greifsystem zum Einbringen eines Fahrzeugsitzes in die Karosserie eines Fahrzeuges, aufweisend einen Greiferarm und eine am Greiferarm angeordnete Greifeinrichtung zum Greifen des Fahrzeugsitzes. Ferner betrifft die Erfindung ein Verfahren zum Einbringen eines Fahrzeugsitzes in die Karosserie eines Fahrzeuges durch ein Greifsystem, aufweisend einen Greiferarm und eine am Greiferarm angeordnete Greifeinrichtung zum Greifen des Fahrzeugsitzes.

Fahrzeugsitze, insbesondere Fahrzeugvordersitze, werden an der Karosserie, auch als Karosse bezeichnet, eines Fahrzeuges, insbesondere eines Kraftfahrzeuges, befestigt. Das heißt, bei den meisten Fahrzeugen werden die Fahrzeugsitze an der Bodengruppe der Karosserie angeordnet. Das Einbringen der Fahrzeugsitze, insbesondere der Fahrzeugvordersitze, erfolgt in der Regel durch einen Türausschnitt der Karosserie. Es ist bekannt, dass die Fahrzeugsitze durch ein Greifsystem gegriffen und in der Karosserie, insbesondere an der Bodengruppe der Karosserie, positioniert werden. So ist aus der DE 20 2008 014 157 U1 ein Roboter bekannt, durch den Fahrzeugsitze in die Karosserie eines Fahrzeuges eingebracht werden. Ferner werden beispielsweise bei der Montage der Vordersitze in ein Kraftfahrzeug, insbesondere in einen Personenkraftwagen, Gurtbandgreifsysteme eingesetzt. Nachteilig bei Gurtbandgreifsystemen sind der ungenaue Handlingsprozess und die dadurch erforderlichen hohen Schutzmaßnahmen im Bereich des Einstiegs, des Cockpits und der Mittelkonsole. Bauraumbedingt beziehungsweise konzeptbedingt ist ein Greifen spezifischer Vordersitze mit einem Gurtbandgreifer nicht möglich. Ein Gurtbandgreifsystem ermöglicht ferner nur einfache Einfahrkurven beim Einheben des Vordersitzes in die Karosserie eines Fahrzeuges. So ist bei einem Gurtbandgreifsystem ein Einschwenken mit der Kopfstütze voraus durch den Türausschnitt nicht möglich.

Bei modernen Fahrzeugsitzen, insbesondere Fahrzeugvordersitzen, sind Gurtbandgreifsysteme nicht verwendbar, da Designelemente und sicherheitsrelevante Sitzelemente, wie beispielsweise ein Airbag, des Fahrzeugsitzes leicht durch die Gurtbandgreifsysteme beschädigt werden können. Moderne Fahrzeugsitze, insbesondere Fahrzeugvordersitze, können durch die bekannten Gurtbandgreifsysteme nicht automatisiert in die Karosserie eines Fahrzeuges eingebracht werden.

In den japanischen Offenlegungsschriften mit den Nummern JP 2005329895, JP 11049054, und JP 06092278 sowie in der deutschen Offenlegungsschrift mit der Nummer DE 102 50 680 A1 werden Greifvorrichtungen für Fahrzeugsitze offenbart. Dort sind jeweils auseinanderspreizbare Greifelemente zu erkennen, die im Zusammenspiel mit einem zusätzlichen Widerlager das Greifen eines Sitzes ermöglichen. Nachteilhaft bei den dort offenbarten Vorrichtungen ist es, dass ein Widerlager notwendig ist, um ein sicheres Halten des Fahrzeugsitzes zu gewährleisten. Dieses Widerlager erfordert zusätzlichen Bauraum und erhöht die Komplexität einer solchen Vorrichtung.

Daher ist es die Aufgabe der Erfindung, ein exaktes und flexibles Greifsystem zum Einbringen eines Fahrzeugsitzes in die Karosserie eines Fahrzeuges sowie ein Verfahren zum Einbringen eines Fahrzeugsitzes in die Karosserie eines Fahrzeuges durch ein Greifsystem zu schaffen, die ein einfaches, schnelles und sicheres Greifen und Einbringen eines Fahrzeugsitzes in die Karosserie des Fahrzeuges ermöglichen. Insbesondere soll ein einfaches und sicheres automatisiertes Einbringen des Fahrzeugsitzes in die Karosserie des Fahrzeuges ermöglicht werden.

Diese Aufgabe wird erfindungsgemäß durch ein Greifsystem zum Einbringen eines Fahrzeugsitzes in die Karosserie eines Fahrzeuges mit den Merkmalen gemäß dem unabhängigen Patentanspruch 1 sowie durch ein Verfahren zum Einbringen eines Fahrzeugsitzes in die Karosserie eines Fahrzeuges durch ein Greifsystem gemäß dem unabhängigen Patentanspruch 8 gelöst. Weitere Merkmale und Details der Erfindung ergeben sich aus den Unteransprüchen, der Beschreibung sowie den Zeichnungen. Merkmale und Details die im Zusammenhang mit dem Greifsystem beschrieben sind, gelten dabei selbstverständlich auch im Zusammenhang mit dem Verfahren, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Greifsystem zum Einbringen eines Fahrzeugsitzes in die Karosserie eines Fahrzeuges, aufweisend einen Greiferarm und eine am Greiferarm angeordnete Greifeinrichtung zum Greifen des Fahrzeugsitzes, wobei die Greifeinrichtung wenigstens zwei auseinanderspreizbare Greifelemente aufweist, die zum formschlüssigen Eingreifen in zumindest zwei Aufnahmeelemente, die im Übergangsbereich von der Sitzfläche zu der Lehnenfläche des Fahrzeugsitzes vorgesehen sind, ausgebildet sind, gelöst.

Ein derartiges Greifsystem ermöglicht ein schnelles und sicheres Greifen eines Fahrzeugsitzes, insbesondere eines Fahrzeugvordersitzes, und das einfache Einbringen des Fahrzeugsitzes in die Karosserie eines Fahrzeuges, insbesondere eines Personenkraftwagens. An dem Greiferarm des Greifsystems ist eine Greifeinrichtung zum Greifen des Fahrzeugsitzes angeordnet. Der Greiferarm ist vorzugsweise ein Roboterarm oder ein manuell zu bedienender Greifarm, ein sogenanntesHandlingsgerät. Der Greiferarm ermöglicht ein Verdrehen und Verschwenken des durch die Greifeinrichtung gegriffenen Fahrzeugsitzes. Das heißt, der Greiferarm beziehungsweise der Roboterarm kann den Fahrzeugsitz derart Verdrehen, Kippen oder Verschwenken, dass dieser durch einen Ausschnitt, insbesondere einen Türausschnitt, der Karosserie des Fahrzeuges in das Innere der Karosserie eingebracht werden kann, ohne an der Karosserie des Fahrzeuges anzuecken. Das Greifsystem ermöglicht ein sehr exaktes und flexibles Einbringen eines Fahrzeugsitzes in die Karosserie eines Fahrzeuges. Insbesondere kann ein derartiges Greifsystem produktlinienunabhängig betrieben werden. Das heißt, durch ein derartiges Greifsystem können unterschiedlich ausgebildete Fahrzeugsitze gegriffen werden.

Es ist erforderlich, dass jeder Fahrzeugsitz einfach und sicher gegriffen werden kann. Dies wird bei dem erfindungsgemäßen Greifsystem dadurch erreicht, dass die Greifeinrichtung wenigstens zwei auseinanderspreizbare Greifelemente aufweist, die zum formschlüssigen Eingreifen in zumindest zwei Aufnahmeelemente, die im Übergangsbereich von der Sitzfläche zu der Lehnenfläche des Fahrzeugsitzes vorgesehen sind, ausgebildet sind. Die auseinanderspreizbaren Greifelemente sind derart ausgebildet, dass sie zunächst im nicht auseinandergespreizten Zustand im Übergangsbereich von der Sitzfläche zu der Lehnenfläche des Fahrzeugsitzes positioniert werden können. Nach der Positionierung der Greifelemente zwischen den Aufnahmeelementen im Übergangsbereich von der Sitzfläche zu der Lehnenfläche des Fahrzeugsitzes, können die Greifelemente zum formschlüssigen Eingreifen in die Aufnahmeelemente auseinandergespreizt werden. Die Aufnahmeelemente sind vorzugsweise an der Seite des Fahrzeugsitzes angeordnet. Beispielsweise können diese im Bereich des wenigstens einen Gelenkes, das ermöglicht, dass die Lehnenfläche des Fahrzeugsitzes relativ zu der Sitzfläche des Fahrzeugsitzes geneigt werden kann, angeordnet sein.

Durch das Auseinanderspreizen der Greifelemente kann die Greifeinrichtung des Greifsystems den Fahrzeugsitz form- und kraftschlüssig greifen, so dass dieser sicher, das heißt nicht bewegbar, an dem Greifsystem sitzt. Die Aufnahmeelemente sind insbesondere als Vertiefungen oder Aussparungen ausgebildet. Zumindest die Spitze eines jeden Greifelementes liegt im Greifzustand fest in dem entsprechenden Aufnahmeelement ein. Im Greifzustand sind die auseinandergespreizten Greifelemente auseinandergespannt, so dass diese sicher in der Greifposition, das heißt in den Aufnahmeelementen des Fahrzeugsitzes, verharren.

Durch ein derartiges Greifsystem sind niedrigere Taktzeiten, schwierigere Einfahrkurven und hohe Lasten beim Einbringen von Fahrzeugsitzen in Karosserien von Fahrzeugen darstellbar. Das Greifsystem ermöglicht, dass die Fahrzeugsitze im Schwerpunkt gegriffen werden können und dadurch sicher an dem Greifsystem gehalten werden können.

Gemäß der Erfindung ist bei dem Greifsystem vorgesehen, dass die wenigstens zwei auseinanderspreizbaren Greifelemente als Bolzen ausgebildet sind. Die Bolzen greifen beim Auseinanderspreizen formschlüssig in die entsprechenden Aufnahmeelemente, insbesondere in die Vertiefungen oder Aussparungen, an dem Fahrzeugsitz ein. Das heißt, die als Bolzen ausgebildeten Greifelemente können durch die Greifeinrichtung auseinandergespannt werden, bis sie form- und kraftschlüssig in die Aufnahmeelemente an dem Fahrzeugsitz eingreifen. Dazu sind die Greifelemente als leckige Bolzen augebildet, die beim Auseinanderspannen beziehungsweise Auseinanderspreizen in entsprechend ausgebildete Aufnahmeelemente eingreifen können.

Die Greifelemente, dass heißt die Bolzen, können an ihren freien Enden verjüngend, beispielsweise konisch zulaufend, ausgebildet sein, um einfach in die entsprechenden Aufnahmeelemente eingeführt werden zu können. Die wenigstens zwei auseinanderspreizbaren Greifelemente können verschiedenartig auseinandergespreizt beziehungsweise verspannt werden. So kann dies beispielsweise durch einen elektrischen Stellantrieb erfolgen. Besonders bevorzugt ist jedoch ein Greifsystem, bei dem die wenigstens zwei auseinanderspreizbaren Greifelemente mechanisch oder pneumatisch betätigbar sind. Mechanisch ausgebildete Greifelemente können durch Fachpersonal manuell betätigt werden. Dabei können die Greifelemente in bestimmten Positionen verrasten. Pneumatisch ausgebildete Greifelemente können durch entsprechend vorgesehene Betätigungseinrichtungen betätigt werden. Insbesondere durch pneumatisch ausgebildete Greifelemente kann ein sehr guter Formschluss zwischen den Greifelementen und den Aufnahmeelementen des Fahrzeugsitzes erlangt werden. Die Greifelemente beziehungsweise die freien Enden der Greifelemente werden dabei formschlüssig in die Aufnahmeelemente des Fahrzeugsitzes eingepresst.

Aus sicherheitstechnischen Gründen können zum Auseinanderspreizen der Greifelemente Federelemente vorgesehen sein. Das heißt, zum Auseinanderspreizen der Greifelemente kann die Federkraft von Federelementen genutzt werden, das Lösen der Greifelemente von den Aufnahmeelementen kann pneumatisch erfolgen. Federelemente, wie Federn, ermöglichen, dass das Auseinanderspreizen der Greifelemente mit einer bestimmten Kraft erfolgt. Insbesondere kann ein Auseinanderdrücken der Aufnahmeelemente durch die Federelemente unterbunden werden.

Gemäß einer besonders bevorzugten Weiterentwicklung der Erfindung kann bei dem Greifsystem vorgesehen sein, dass die Greifeinrichtung eine erste bewegbare Anlageeinrichtung zur Anlage gegen die Lehnenfläche des Fahrzeugsitzes aufweist. Um den Sitz im Greifsystem exakt zu fixieren, wird die erste bewegbare Anlageeinrichtung gegen die Sitzlehne beziehungsweise Lehnenfläche ausgefahren. Hierdurch wird das Greifsystem gegen Lehnenfläche und Sitzfläche des Fahrzeugsitzes verspannt. Durch die Kombination des form- und kraftschlüssigen Greifens durch die Greifeinrichtung und das Verspannen der ersten bewegbaren Anlageeinrichtung gegen die Lehnenfläche wird der Fahrzeugsitz automatisierungsfähig durch die Greifeinrichtung des Greifsystems gegriffen.

Zusätzlich oder alternativ kann bei dem Greifsystem vorgesehen sein, dass eine zweite bewegbare Anlageeinrichtung zur Anlage gegen die Sitzfläche des Fahrzeugsitzes vorgesehen ist. Hierdurch kann die Greifeinrichtung nach dem Greifen des Fahrzeugsitzes durch die Greifelemente derart an der Greifeinrichtung fixiert werden, dass der Sitz relativ zur Greifeinrichtung unbeweglich an dieser sitzt. Vorzugsweise ist eine erste bewegbare Anlageeinrichtung zur Anlage gegen die Lehnenfläche des Fahrzeugsitzes und eine zweite bewegbare Anlageeinrichtung zur Anlage gegen die Sitzfläche des Fahrzeugsitzes vorgesehen. Durch ein derartig ausgebildetes Greifsystem kann ein Fahrzeugsitz exakt und flexibel gegriffen und sicher in die Karosserie eines Fahrzeuges eingebracht werden. Insbesondere ist durch eine derartige Ausgestaltung des Greifsystems dieses produktlinienunabhängig, das heißt kann bei verschiedenartig ausgebildeten Fahrzeugsitzen verwendet werden, ohne dass es erforderlich ist dieses umzurüsten. Durch dieses Greifsystem sind niedrigere Taktzeiten, schwierigere Einfahrkurven und hohe Lasten beim Einbringen von Fahrzeugsitzen in Fahrzeugkarosserien möglich. Die erste bewegbare Anlageeinrichtung zur Anlage gegen die Lehnenfläche des Fahrzeugsitzes und die zweite bewegbare Anlageeinrichtung zur Anlage gegen die Sitzfläche des Fahrzeugsitzes ermöglichen ein Verspannen der Lehnenfläche gegen die Sitzfläche des Fahrzeugsitzes. Durch die Kombination des formschlüssigen Greifens und des Verspannens der Lehnenfläche gegen die Sitzfläche können die Fahrzeugsitze in einer sogenannten Dreiecksanordnung automatisierungsfähig gegriffen werden.

Vorzugsweise können die erste bewegbare Anlageeinrichtung und/oder die zweite bewegbare Anlageeinrichtung mechanisch oder pneumatisch betätigbar sein. Gemäß einer besonders bevorzugten Weiterentwicklung der Erfindung kann bei dem Greifsystem vorgesehen sein, dass zur Betätigung der ersten bewegbaren Anlageeinrichtung und/oder der zweiten bewegbaren Anlageeinrichtung zumindest ein Spannzylinder vorgesehen ist. Insbesondere weist das Greifsystem beziehungsweise die Greifeinrichtung einen ersten Spannzylinder zur Betätigung der ersten bewegbaren Anlageeinrichtung und einen zweiten Spannzylinder zur Betätigung der zweiten bewegbaren Anlageeinrichtung auf. Die Anlageeinrichtungen sind vorzugsweise großflächig ausgebildet, so dass diese sicher an die Lehnenfläche beziehungsweise die Sitzfläche angepresst werden können. Die Anlageeinrichtungen können eine durchgehend flächige Form aufweisen, aber auch gitterförmig ausgebildet sein. Durch eine gitterförmige Ausgestaltung der Anlageeinrichtungen kann Gewicht beim Greifsystem eingespart werden.

Gemäß einem zweiten Aspekt der Erfindung wird die Aufgabe durch ein Verfahren zum Einbringen eines Fahrzeugsitzes in die Karosserie eines Fahrzeuges durch ein Greifsystem, aufweisend einen Greiferarm und eine am Greiferarm angeordnete Greifeinrichtung zum Greifen des Fahrzeugsitzes, gelöst, wobei das Verfahren durch folgende Verfahrensschritte gekennzeichnet ist:
a) wenigstens zwei auseinanderspreizbare Greifelemente, ausgebildet als eckige Bolzen, der Greifeinrichtung werden mittels des Greiferarms zwischen zumindest zwei im Übergangsbereich von der Sitzfläche zu der Lehnenfläche des Fahrzeugsitzes angeordnete Aufnahmeelemente positioniert,
b) die wenigstens zwei auseinanderspreizbaren Greifelemente werden auseinandergespreizt bis sie formschlüssig und kraftschlüssig in die zumindest zwei Aufnahmeelemente eingreifen,
c) der gegriffene Fahrzeugsitz wird in die Karosserie des Fahrzeuges eingebracht.

Insbesondere ist ein Verfahren zum Einbringen eines Fahrzeugsitzes in die Karosserie eines Fahrzeuges durch ein Greifsystem bevorzugt, bei dem das Greifsystem gemäß dem ersten Aspekt der Erfindung ausgebildet ist.

Das erfindungsgemäße Verfahren ermöglicht ein einfaches und sicheres Greifen und Einbringen eines Fahrzeugsitzes in die Karosserie eines Fahrzeuges, insbesondere eines Kraftfahrzeuges. Das Verfahren ermöglicht insbesondere ein schnelles, automatisiertes Greifen und Einbringen von Fahrzeugsitzen in Karosserien von Fahrzeugen. Die Fahrzeugsitze werden bei dem Verfahren einfach und sicher im Schwerpunkt des Fahrzeugsitzes gegriffen und dadurch sicher an dem Greifsystem gehalten. Das heißt, das Greifsystem beziehungsweise das Verfahren zum Einbringen eines Fahrzeugsitzes in die Karosserie eines Fahrzeuges durch ein erfindungsgemäßes Greifsystem ermöglicht, dass die Fahrzeugsitze automatisiert im Schwerpunkt ihrer Sitzstruktur gegriffen und anschließend verschwenkt werden können.

Die Greifelemente der Greifeinrichtung des Greifsystems werden mittels des Greiferarms, insbesondere eines Roboterarms oder eines ähnlichen Handlingsgerätes, zwischen der Sitz- und Lehnenfläche des Fahrzeugsitzes positioniert und anschließend pneumatisch oder mechanisch in der im Fahrzeugsitz vorgehaltenen Geometrie, das heißt den Aufnahmeelementen, form- und kraftschlüssig verspannt. Um den Fahrzeugsitz im Greifsystem exakt zu fixieren, wird vorteilhafterweise eine erste bewegbare Anlageeinrichtung, insbesondere mittels eines Spannzylinders, gegen die Sitzlehne beziehungsweise Lehnenfläche des Fahrzeugsitzes ausgefahren, so dass die Greifeinrichtung gegen die Lehnenfläche des Fahrzeugsitzes verspannt wird. Zusätzlich kann die Greifeinrichtung mittels einer zweiten bewegbaren Anlageeinrichtung gegen die Sitzfläche des Fahrzeugsitzes verspannt werden. Die bewegbaren Anlageeinrichtungen werden vorzugsweise mechanisch oder pneumatisch gegen die Sitzfläche beziehungsweise Lehnenfläche des Fahrzeugsitzes ausgefahren und so gegeneinander verspannt. Durch diese Dreiecksanordnung wird der Fahrzeugsitz sehr sicher automatisierungsfähig gegriffen.

Die Erfindung und ihre Weiterbildungen sowie deren Vorteile werden nachfolgend anhand von Ausführungsbeispielen unter Bezugnahme auf die beiliegenden Zeichnungen näher erläutert. Es zeigt schematisch:
- Figur 1: eine perspektivische Ansicht auf die Greifeinrichtung eines Greifsystems, das nach dem erfindungsgemäßen Konstruktionsprinzip ausgebildet ist,
- Figur 2: eine perspektivische Ansicht auf ein Greifelement der Greifeinrichtung gemäß Fig. 1, das in ein Aufnahmeelement eines Fahrzeugsitzes eingreift,
- Figur 3: die Greifeinrichtung gemäß Fig. 1 in einer Seitenansicht, während des Greifens eines Fahrzeugsitzes,
- Figur 4: die Greifeinrichtung gemäß Fig. 1 in einer Draufsicht, während des Greifens eines Fahrzeugsitzes,
- Figur 5: eine perspektivische Ansicht eines Greifsystems, das nach dem erfindungsgemäßen Konstruktionsprinzip ausgebildet ist, mit einem gegriffenen Fahrzeugsitz.

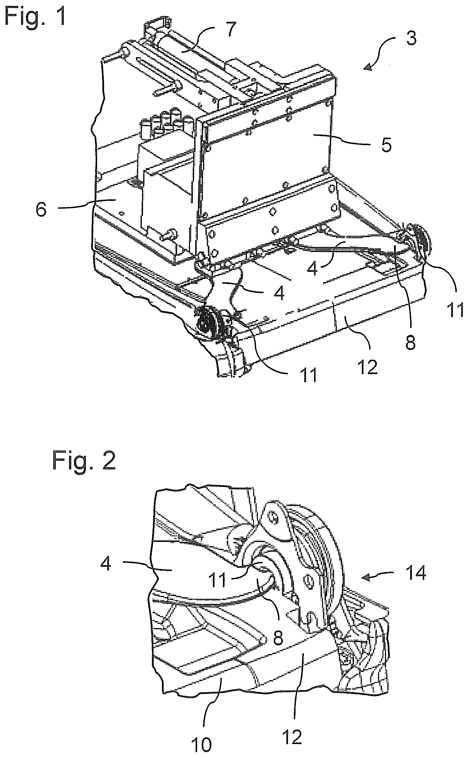

Elemente mit gleicher Funktion und Wirkungsweise sind in den Figuren 1 bis 5 jeweils mit denselben Bezugszeichen versehen.

Fig. 1 zeigt in einer perspektivischen Ansicht eine Ausführungsvariante der Greifeinrichtung 3 eines Greifsystems 1, das nach dem erfindungsgemäßen Konstruktionsprinzip ausgebildet ist. Das Greifsystem 1 weist einen Greiferarm 2 auf, an dessen Ende die Greifeinrichtung 3 angeordnet ist. Der Greiferarm 2, der insbesondere als Roboterarm ausgebildet ist, ermöglicht, dass die Greifeinrichtung 3 und damit der durch die Greifeinrichtung 3 gegriffene Fahrzeugsitz dreidimensional bewegt werden kann. Die Greifeinrichtung 3 weist Greifelemente 4 auf, die zum formschlüssigen und kraftschlüssigen Eingreifen in zumindest zwei Aufnahmeelemente 11, die im Übergangsbereich 14 von der Sitzfläche 12 zu der Lehnenfläche 13 des Fahrzeugsitzes vorgesehen sind, ausgebildet sind. Die in der Fig. 1 dargestellten Greifelemente 4 greifen mit deren freien Enden 8 in die Aufnahmeelemente 11 am Fahrzeugsitz formschlüssig und kraftschlüssig ein. Die Aufnahmeelemente 11 sind im Übergangsbereich 14 seitlich angeordnet, so dass die Greifelemente 4 zum Eingreifen in die Aufnahmeelemente 11 auseinandergespreizt werden müssen. Fig. 1 zeigt die Greifelemente 4 im auseinandergespreizten Zustand, das heißt im Eingriffszustand in die Aufnahmeelemente 11 des Fahrzeugsitzes.

Die Greifelemente 4 werden im nicht gespreizten Zustand in den Übergangsbereich 14 zwischen der Sitzfläche 12 und der Lehnenfläche des Fahrzeugsitzes positioniert.

Das heißt, die Greifelemente 4 werden zwischen die Aufnahmeelemente 11, die vorzugsweise an den Außenseiten im Übergangsbereich 14 zwischen der Sitzfläche 12 und der Lehnenfläche des Fahrzeugsitzes angeordnet sind, positioniert. Beim Auseinanderspreizen beziehungsweise Verspannen der Greifelemente 4 greifen die freien Enden 8 der Greifelemente formschlüssig in die vorzugsweise als Vertiefungen oder Aussparungen ausgebildeten Aufnahmeelemente 11 des Fahrzeugsitzes ein. Dabei verspannen die Greifelemente 4 derart, dass der Fahrzeugsitz fest, das heißt kraft- und formschlüssig, durch die Greifelemente 4 gegriffen wird.

Die Greifeinrichtung 3 weist ferner eine erste bewegbare Anlageeinrichtung 5, die zur Anlage gegen die Lehnenfläche des Fahrzeugsitzes ausgebildet ist, auf. Des Weiteren weist die Greifeinrichtung 3 eine zweite bewegbare Anlageeinrichtung 6, die zur Anlage gegen die Sitzfläche 12 des Fahrzeugsitzes ausgebildet ist, auf. Die bewegbaren Anlageeinrichtungen 5, 6 der Greifeinrichtung 3 sind vorzugsweise mechanisch oder pneumatisch betätigbar. Zur pneumatischen Betätigung der bewegbaren Anlageeinrichtungen 5, 6 kann beispielsweise ein Spannzylinder 7 vorgesehen sein, wie in Fig. 1 dargestellt. Die bewegbaren Anlageeinrichtungen 5, 6 werden an die Sitzfläche 12 beziehungsweise an die Lehnenfläche 13 des Fahrzeugsitzes angelegt, so dass der Sitz nach dem Greifen durch die Greifelemente 4 relativ zur Greifeinrichtung 3 nicht kippen kann. Die Verspannung der Sitzfläche 12 gegen die Lehnenfläche 13 des Fahrzeugsitzes durch die bewegbaren Anlageeinrichtungen 5, 6 verhindert, dass die Greifelemente 4 beziehungsweise die freien Enden 8 der Greifelemente 4 aufgrund des Gewichtes des Fahrzeugsitzes abbrechen.

In der Fig. 2 ist in einer perspektivischen Ansicht ein Greifelement 4 der Greifeinrichtung 3 gemäß Fig. 1 dargestellt. Das Greifelement 4 beziehungsweise das freie Ende 8 des Greifelementes 4 greift formschlüssig in das Aufnahmeelement 11 des Fahrzeugsitzes ein. Das Greifelement 4 ist als Greifzange ausgebildet. Durch das Auseinanderspreizen wenigstens zweier Greifelemente 4 in entgegengesetzte Richtungen werden diese in den Aufnahmeelementen 11 im Übergangsbereich 14 zwischen der Sitzfläche 12 und der Lehnenfläche 13 des Fahrzeugsitzes kraftschlüssig verspannt. Hierdurch kann der Fahrzeugsitz durch die Greifeinrichtung 3 gegriffen und durch den Greiferarm des Greifsystems angehoben werden.

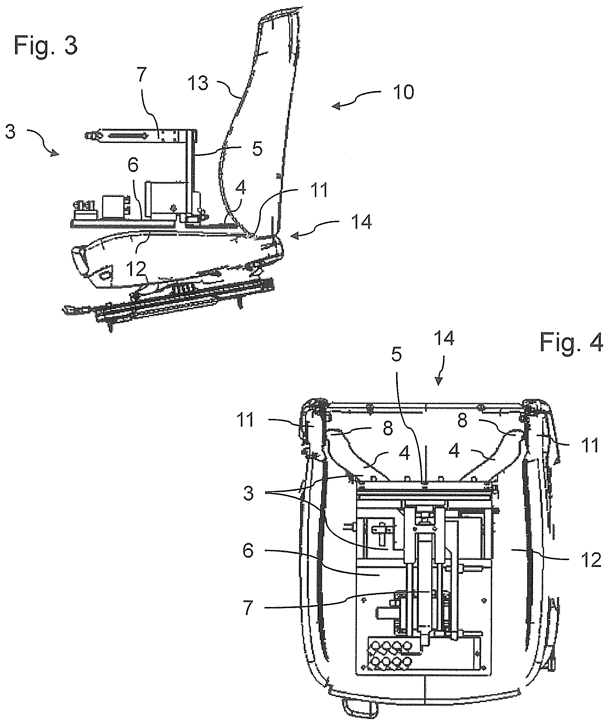

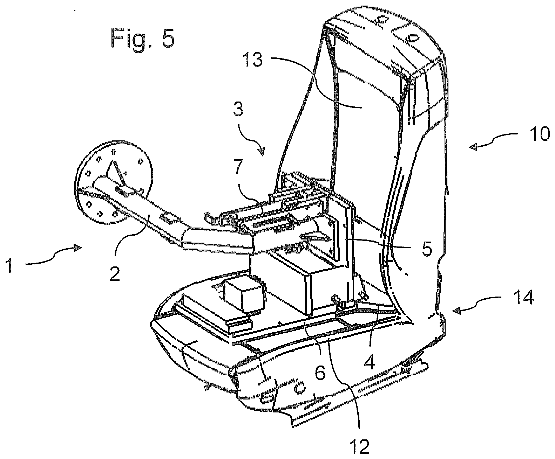

In der Fig. 3 ist die Greifeinrichtung gemäß Fig. 1 in einer Seitenansicht, während des Greifens eines Fahrzeugsitzes, dargestellt. In der Fig. 4 ist die Greifeinrichtung gemäß Fig. 1 in einer Draufsicht, während des Greifens eines Fahrzeugsitzes, gezeigt. Die Greifelemente 4 werden zwischen den Aufnahmeelementen 11 des Fahrzeugsitzes 10 positioniert. Nach der Positionierung der Greifelemente 4 werden diese verspannt, das heißt auseinandergespreizt, bis sie in die zwei an den Seiten des Übergangsbereiches 14 zwischen der Sitzfläche 12 und der Lehnenfläche des Fahrzeugsitzes angeordneten Aufnahmeelemente 11 formschlüssig eingreifen. Die erste bewegbare Anlageeinrichtung 5 kann mittels des Spannzylinders 7 gegen die Lehnenfläche 13 des Fahrzeugsitzes 10 gepresst werden, die zweite bewegbare Anlageeinrichtung 6 kann gegen die Sitzfläche 12 des Fahrzeugsitzes 10 gepresst werden. Durch die Kombination des form- und kraftschlüssigen Greifens des Fahrzeugsitzes 10 durch die Greifelemente 4 und die Verspannung der Sitzfläche 12 und der Lehnenfläche 13 gegeneinander über die bewegbaren Anlageeinrichtungen 5, 6 kann der Fahrzeugsitz 10 nicht kippbar an der Greifeinrichtung 3 fixiert werden und über den Greiferarm 2 automatisiert oder manuell einfach und sicher in eine Karosserie eines Fahrzeuges, insbesondere eines Kraftfahrzeuges, eingebracht werden. Dies ist nochmals in Fig. 5 dargestellt. Fig. 5 zeigt in einer perspektivischen Ansicht ein Greifsystem 1, das nach dem erfindungsgemäßen Konstruktionsprinzip ausgebildet ist. Der Fahrzeugsitz 10 ist durch die Greifeinrichtung 3 des Greifsystems 1 gegriffen. Der Greiferarm 2 ermöglicht die freie Bewegung des Fahrzeugsitzes 10. Dieser kann durch den Greiferarm 2 gedreht oder verschwenkt werden, so dass er einfach in die Karosserie eines Fahrzeuges eingebracht werden kann. In der Fig. 5 ist der Einsatz eines Greifsystems 1 mit Formschluss im Schwerpunkt der Sitzstruktur des Fahrzeugsitzes 10 gezeigt. Die als eckige Bolzen ausgebildeten Greifelemente 4 der Greifeinrichtung 3 des Greifsystems 1 werden mittels des Greiferarms 2 zwischen der Sitzfläche 12 und der Lehnenfläche 13 positioniert und anschließend pneumatisch oder mechanisch in der im Vordersitz extra vorgehaltenen Geometrie, das heißt den Aufnahmeelementen 11, formschlüssig verspannt. Um den Fahrzeugsitz 10, insbesondere einen Fahrzeugvordersitz, am Greifsystem 1 exakt zu fixieren, werden die erste und zweite bewegbare Anlageeinrichtung 5, 6 mittels des Spannzylinders 7 gegen die Sitzlehne bzw.

Lehnenfläche 13 ausgefahren, wodurch die Greifeinrichtung 3 gegen Lehnenfläche 13 und Sitzfläche 12 verspannt wird. Durch die Kombination von Formschluss und Kraftbetätigung in einer Dreiecksanordnung können Fahrzeugsitze 10, insbesondere Fahrzeugvordersitze, exakt, flexibel und produktlinienunabhängig gegriffen und in die Karosserie eines Fahrzeuges eingebracht werden. Durch ein derartiges Greifsystem 1 sind niedrigere Taktzeiten, schwierigere Einfahrkurven und hohe Lasten darstellbar.

### Bezugszeichenliste

- 1: Greifsystem
- 2: Greiferarm
- 3: Greifeinrichtung
- 4: Greifelemente
- 5: erste bewegbare Anlagefläche
- 6: zweite bewegbare Anlagefläche
- 7: Spannzylinder
- 8: freies Ende eines Greifelementes

- 10: Fahrzeugsitz
- 11: Aufnahmeelemente
- 12: Sitzfläche
- 13: Lehnenfläche
- 14: Übergangsbereich zwischen Sitzfläche und Lehnenfläche

## Patentansprüche

1. Greifsystem (1) zum Einbringen eines Fahrzeugsitzes (10) in die Karosserie eines Fahrzeuges, aufweisend einen Greiferarm (2) und eine am Greiferarm (2) angeordnete Greifeinrichtung (3) zum Greifen des Fahrzeugsitzes (10),
**dadurch gekennzeichnet,**
**dass** die Greifeinrichtung (3) wenigstens zwei auseinanderspreizbare Greifelemente (4), ausgebildet als eckige Bolzen, aufweist, die zum formschlüssigen Eingreifen in zumindest zwei Aufnahmeelemente (11), die im Übergangsbereich (14) von der Sitzfläche (12) zu der Lehnenfläche (13) des Fahrzeugsitzes (10) vorgesehen sind, ausgebildet sind.

2. Greifsystem (1) nach Anspruch 1,
**dadurch gekennzeichnet,**
**dass** die wenigstens zwei auseinanderspreizbaren Greifelemente (4) mechanisch oder pneumatisch betätigbar sind.

3. Greifsystem (1) nach Anspruch 1 oder 2,
**dadurch gekennzeichnet,**
**dass** zum Auseinanderspreizen der wenigstens zwei Greifelemente (4) Federelemente vorgesehen sind.

4. Greifsystem (1) nach wenigstens einem der vorhergehenden Ansprüche 1 bis 3,
**dadurch gekennzeichnet,**
**dass** die Greifeinrichtung (3) eine erste bewegbare Anlageeinrichtung (5) zur Anlage gegen die Lehnenfläche (13) des Fahrzeugsitzes (10) aufweist.

5. Greifsystem (1) nach wenigstens einem der vorhergehenden Ansprüche 1 bis 4,
**dadurch gekennzeichnet,**
**dass** die Greifeinrichtung (3) eine zweite bewegbare Anlageeinrichtung (6) zur Anlage gegen die Sitzfläche (12) des Fahrzeugsitzes (10) aufweist.

6. Greifsystem (1) nach wenigstens einem der vorhergehenden Ansprüche 4 oder 5,
**dadurch gekennzeichnet,**
**dass** die erste bewegbare Anlageeinrichtung (5) und/oder die zweite bewegbare Anlageeinrichtung (6) mechanisch oder pneumatisch betätigbar sind.

7. Greifsystem (1) nach wenigstens einem der vorhergehenden Ansprüche 4 bis 6,
**dadurch gekennzeichnet,**
**dass** zur Betätigung der ersten bewegbaren Anlageeinrichtung (5) und/oder der zweiten bewegbaren Anlageeinrichtung (6) zumindest ein Spannzylinder (7) vorgesehen ist.

8. Verfahren zum Einbringen eines Fahrzeugsitzes (10) in die Karosserie eines Fahrzeuges durch ein Greifsystem (1), aufweisend einen Greiferarm (2) und eine am Greiferarm (2) angeordnete Greifeinrichtung (3) zum Greifen des Fahrzeugsitzes (10), wobei das Verfahren durch folgende Verfahrensschritte gekennzeichnet ist:
a) wenigstens zwei auseinanderspreizbare Greifelemente (4), ausgebildet als eckige Bolzen, der Greifeinrichtung (3) werden mittels des Greiferarms (2) zwischen zumindest zwei im Übergangsbereich (14) von der Sitzfläche (12) zu der Lehnenfläche (13) des Fahrzeugsitzes (10) angeordnete Aufnahmeelemente (11) positioniert,
b) die wenigstens zwei auseinanderspreizbaren Greifelemente (4) werden auseinandergespreizt bis sie formschlüssig und kraftschlüssig in die zumindest zwei Aufnahmeelemente (11) eingreifen,
c) der gegriffene Fahrzeugsitz (10) wird in die Karosserie des Fahrzeuges eingebracht.

9. Verfahren nach Anspruch 8,
**dadurch gekennzeichnet,**
**dass** zum Durchführen des Verfahrens ein Greifsystem (1) gemäß wenigstens einem der vorhergehenden Ansprüche 1 bis 7 verwendet wird.

## Claims

1. A gripping system (1) for introducing a vehicle seat (10) into the body of a vehicle, having a gripper arm (2) and a gripping means (3), arranged on the gripper arm (2), for gripping the vehicle seat (10),
**characterised in that**
the gripping means (3) has at least two gripping elements (4), which can be spread apart and which are formed as angular bolts, which elements are designed to engage positively in at least two receiving elements (11) which are provided in the region of transition (14) from the sitting surface (12) to the backrest surface (13) of the vehicle seat (10).

2. A gripping system (1) according to Claim 1,
**characterised in that**
the at least two gripping elements (4) which can be spread apart can be actuated mechanically or pneumatically.

3. A gripping system (1) according to Claim 1 or Claim 2,
**characterised in that**
spring elements are provided for spreading apart the at least two gripping elements (4).

4. A gripping system (1) according to at least one of the preceding Claims 1 to 3,
**characterised in that**
the gripping means (3) has a first movable contacting means (5) for lying against the backrest surface (13) of the vehicle seat (10).

5. A gripping system (1) according to at least one of the preceding Claims 1 to 4,
**characterised in that**
the gripping means (3) has a second movable contacting means (6) for lying against the sitting surface (12) of the vehicle seat (10).

6. A gripping system (1) according to at least one of the preceding Claims 4 or 5,
**characterised in that**
the first movable contacting means (5) and/or the second movable contacting means (6) can be actuated mechanically or pneumatically.

7. A gripping system (1) according to at least one of the preceding Claims 4 to 6,
**characterised in that**
at least one clamping cylinder (7) is provided for actuating the first movable contacting means (5) and/or the second movable contacting means (6).

8. A method for introducing a vehicle seat (10) into the body of a vehicle by a gripping system (1), having a gripper arm (2) and a gripping means (3), arranged on the gripper arm (2), for gripping the vehicle seat (10), wherein the method is **characterised by** the following method steps:
a) at least two gripping elements (4), which can be spread apart and which are formed as angular bolts, of the gripping means (3) are positioned by means of the gripper arm (2) between at least two receiving elements (11) arranged in the region of transition (14) from the sitting surface (12) to the backrest surface (13) of the vehicle seat (10),
b) the at least two gripping elements (4) which can be spread apart are spread apart until they engage in positive manner and in non-positive manner in the at least two receiving elements (11),
c) the gripped vehicle seat (10) is introduced into the body of the vehicle.

9. A method according to Claim 8,
**characterised in that**
a gripping system (1) according to at least one of the preceding Claims 1 to 7 is used for carrying out the method.

## Revendications

1. Système de saisie (1) permettant d'introduire un siège (10) dans la carrosserie d'un véhicule comprenant un bras d'accrochage (2) et un dispositif de saisie (3) monté sur le bras d'accrochage (2) pour saisir le siège du véhicule (10),
**caractérisé en ce que**
le dispositif de saisie (3) comporte au moins deux éléments de saisie (4) pouvant être écartés l'un de l'autre, réalisés sous la forme de boulons polygonaux destinés à venir en prise par une liaison par la forme dans au moins deux éléments de réception (11) qui sont prévus dans la zone de transition (14) entre la surface d'assise (12) et la surface de dossier (13) du siège (10) du véhicule.

2. Système de saisie (1) conforme à la revendication 1,
**caractérisé en ce que**
les deux éléments de saisie (4) pouvant être écartés l'un de l'autre peuvent être actionnés mécaniquement ou pneumatiquement.

3. Système de saisie (1) conforme à la revendication 1 ou 2,
**caractérisé en ce qu'**
il est prévu des éléments élastiques pour permettre d'écarter l'un de l'autre les deux éléments de saisie (4).

4. Système de saisie (1) conforme à au moins l'une des revendications précédentes 1 à 3,
**caractérisé en ce que**
le dispositif de saisie (3) comporte un premier dispositif d'installation mobile (5) permettant son application contre la surface de dossier (13) du siège (10) du véhicule.

5. Système de saisie (1) conforme à au moins l'une des revendications précédentes 1 à 4,
**caractérisé en ce que**
le dispositif de saisie (3) comporte un second dispositif d'installation mobile (6) permettant son application contre la surface d'assise (12) du siège (10) du véhicule.

6. Système de saisie (1) conforme à au moins l'une des revendications précédentes 4 ou 5,
**caractérisé en ce que**
le premier dispositif d'installation mobile (5) et/ou le second dispositif d'installation mobile (6) peut(vent) être actionné(s) mécaniquement ou pneumatiquement.

7. Système de saisie (1) conforme à au moins l'une des revendications précédentes 4 à 6,
**caractérisé en ce que**
pour actionner le premier dispositif d'installation mobile (5) et/ou le second dispositif d'installation mobile (6) il est prévu au moins un cylindre de tension (7).

8. Procédé permettant d'introduire un siège (10) dans la carrosserie d'un véhicule au moyen d'un système de saisie (1) comprenant un bras d'accrochage (2) et un dispositif de saisie (3) monté sur le bras d'accrochage (2) pour saisir le siège (10) du véhicule,
ce procédé étant **caractérisé par** les étapes suivantes :
a) au moins deux éléments de saisie (4) du dispositif de saisie (3) pouvant être écartés l'un de l'autre, et réalisés sous la forme de boulons polygonaux sont positionnés au moyen du bras d'accrochage (2) entre au moins deux éléments de réception (11) situés dans la zone de transition (14) entre la surface d'assise (12) et la surface de dossier (13) du siège (10) du véhicule,
b) les deux éléments de saisie (4) pouvant être écartés l'un de l'autre sont écartés l'un de l'autre jusqu'à ce qu'ils viennent en prise par une liaison par la forme et par une liaison par la force dans les deux éléments de réception (11),
c) le siège du véhicule (10) saisi est introduit dans la carrosserie du véhicule.

9. Procédé conforme à la revendication 8,
**caractérisé en ce que**
pour sa mise en oeuvre on utilise un système de saisie (1) conforme à au moins l'une des revendications précédentes 1 à 7.
